# EUROPÄISCHE PATENTSCHRIFT

(11) **EP 3 060 783 B1**
(45) Veröffentlichungstag und Bekanntmachung des Hinweises auf die Patenterteilung: **09.01.2019**
(21) Anmeldenummer: 14776577.0
(22) Anmeldetag: 16.09.2014
(51) Int. Cl.: F02D 19/10, F02M 21/02, F02D 19/06, F02M 43/04, F02M 47/02, F02M 55/00

(54) **ZWEI-KRAFTSTOFF-EINSPRITZSYSTEM UND VERFAHREN ZUR AUSFÜHRUNG MIT EINEM SOLCHEN**
TWO-FUEL INJECTION SYSTEM AND IMPLEMENTATION METHOD USING SAME
SYSTÈME D'INJECTION À DEUX CARBURANTS ET PROCÉDÉ DE MISE EN OEUVRE DUDIT SYSTÈME

(30) Priorität: 26.10.2013 DE 102013017853
(43) Veröffentlichungstag der Anmeldung: 31.08.2016
(73) Patentinhaber: Woodward L'Orange GmbH, 70435 Stuttgart (DE)
(72) Erfinder: KALENBORN, Markus, 89160 Dornstadt (DE)
(74) Vertreter: Conroy, John
(86) Internationale Anmeldenummer: PCT/EP2014/002500
(87) Internationale Veröffentlichungsnummer: WO 2015/058822

(56) Entgegenhaltungen:
- WO-A1-2007/059543
- US-A- 5 996 558
- US-A1- 2007 199 539

## Beschreibung

Die vorliegende Erfindung betrifft ein Dual-Fuel-Kraftstoffeinspritzsystem gemäß dem Oberbegriff von Anspruch 1, insbesondere für eine Brennkraftmaschine. Daneben betrifft die Erfindung ein Verfahren zur Ausführung mit einem solchen Dual-Fuel-Kraftstoffeinspritzsystem gemäß dem Oberbegriff von Anspruch 10. Die Erfindung ist insbesondere mit Zündstrahl-Motoren verwendbar, welche neben neben einem Zündstrahlbetrieb mit Brenngas (und einem Diesel- oder Schweröl-Zündstrahl) einen reinen Diesel- oder Schwerölbetrieb vorsehen. An die Stelle von Schweröl kann hierbei z.B. auch Bio-Öl oder Biokraftstoff treten.

Gasförmige Kraftstoffe gewinnen im (Groß-)Motorensektor, insbesondere bei Stationärmotoren zur Stromerzeugung, zunehmend an Bedeutung. Erdgas eignet sich wegen seiner sehr guten Verfügbarkeit und seines günstigeren Emissionspotenzials gegenüber Dieselkraftstoff ausgezeichnet für einen wirtschaftlichen und umweltschonenden Motorbetrieb.

Bei denjenigen gattungsgemäßen Dual-Fuel-Kraftstoffeinspritzsystemen, welche zur (indirekten) Steuerung der Gasinjektoreinheit(en) Flüssigkraftstoff verwenden (Prinzip Pilotventil-Aktuator-Steuerraum), insbesondere Systeme, welche von Hochdruckgaseinspritzung in Verbindung mit einer Strahlzündung durch Dieselkraftstoff oder Schweröl (oder Biokraftstoff) Gebrauch machen, entsteht regelmäßig Mischleckage. Der Gasanteil dieser Mischleckage wird in Separatoren getrennt, wobei der Flüssigkraftstoff in den Tank zurückgeleitet und das Gas wiederverdichtet oder in den Ansaugtrakt des Motors eingeleitet wird. Nachteilig ist hierbei, dass die Leckage im Hinblick auf die Betriebssituation unterscheidungslos einer Aufbereitung unterzogen wird, mithin der energetische Aufwand nicht optimal ist.

Die US 2007/199539 A1 offenbart ein gattungsgemäßes Dual-Fuel-Kraftstoffeinspritzsystem.

Ausgehend hiervon liegt der vorliegenden Erfindung die Aufgabe zu Grunde, ein Dual-Fuel-Kraftstoffeinspritzsystem und ein zugehöriges Verfahren anzugeben, bei welchem je betriebssituationsabhängig entstehende Leckage an der Gasinjektoreinheit vorteilhaft variabel gehandhabt werden kann.

Diese Aufgabe wird hinsichtlich der Vorrichtung durch die Merkmale des Anspruchs 1 gelöst, hinsichtlich des Verfahrens durch die Merkmale des Anspruchs 10.

Vorteilhafte Weiterbildungen und Ausführungsformen der Erfindung sind in den weiteren Ansprüchen angegeben.

Erfindungsgemäß wird ein Dual-Fuel-Kraftstoffeinspritzsystem für einen Verbrennungsmotor vorgeschlagen. Der Verbrennungsmotor ist bevorzugt eine Brennkraftmaschine, welche(r) mittels des Dual-Fuel-Kraftstoffeinspritzsystems sowohl mit Brenngas, insbesondere im Zündstrahlverfahren (zusammen mit einem Zündstrahl-Flüssigkraftstoff (insbesondere Dieselkraftstoff oder Schweröl / Biokraftstoff)), als auch im reinen Flüssigkraftstoffbetrieb betreibbar ist, insbesondere mit Dieselkraftstoff oder Schweröl (oder z.B. Biokraftstoff). Der Verbrennungsmotor ist bevorzugt ein Großmotor, zum Beispiel für ein Kraftfahrzeug wie etwa ein Schiff oder ein Nutzfahrzeug, oder zum Beispiel für eine stationäre Einrichtung wie ein Blockheizkraftwerk, ein (Not-)Stromaggregat, z.B. auch für Industrieanwendungen.

Das Dual-Fuel-Kraftstoffeinspritzsystem umfasst neben einer Brenngasversorgungseinrichtung und einer Flüssigkraftstoffversorgungseinrichtung eine Brenngas-Injektoreinheit mit einem Flüssigkraftstoff-Steuerteil und einem Gasdüsenteil, an welchen Gasdüsenteil Brenngas (via die Brenngasversorgungseinrichtung) versorgbar (zuführbar) ist. Eine Gas-Düsennadel der Brenngas-Injektoreinheit ist hierbei weiterhin über an den Flüssigkraftstoff-Steuerteil (via die Flüssigkraftstoffversorgungseinrichtung) versorgten Flüssigkraftstoff (insbesondere Diesel bzw. Schweröl (oder Biokraftstoff)) hubsteuerbar.

Die Brenngasversorgungseinrichtung ist bevorzugt eingerichtet, Brenngas (zum Beispiel Erdgas, Biogas, etc.) aus einem Brenngasvorrat (Tank) druckbeaufschlagt, insbesondere hochdruckbeaufschlagt und weiterhin insbesondere mit vorbestimmten Versorgungs-Druckniveaus, an die Brenngas-Injektoreinheit bereitzustellen, das heißt an den Gasdüsenteil derselben (über z.B. einen Gaseinlass der Brenngas-Injektoreinheit). Mit anderen Worten kann über die Brenngasversorgungseinrichtung ein erstes (Kraftstoff-)Drucknivau (Brenngasdruckniveau) an der Brenngas-Injektoreinheit eingestellt werden, d.h. in deren Gasdüsenteil.

Im Zuge einer entsprechenden Hubsteuerung der Düsennadel über den Flüssigkraftstoff-Steuerteil der Brenngas-Injektoreinheit (indirekt gesteuerte Injektoreinheit, insbesondere nach dem Prinzip Düsennadel-Steuerraum-Pilotventil-Aktuator mit Flüssigkraftstoff als Steuerfluid) kann das Brenngas für einen Gasbetrieb bzw. Zündstrahlbetrieb freigesetzt werden, i.e. über eine Gasdüsenanordnung des Gasdüsenteils (z.B. ein oder mehrere Spritzlöcher).

Die Flüssigkraftstoffversorgungseinrichtung des Dual-Fuel-Kraftstoffeinspritzsystems ist analog zur Brenngasversorgungseinrichtung bevorzugt eingerichtet, Flüssigkraftstoff (insbesondere Dieselkraftstoff, Schweröl (oder Biokraftstoff)) aus einem jeweiligen Flüssigkraftstoffvorrat (Tank) druckbeaufschlagt, insbesondere hochdruckbeaufschlagt, an den Flüssigkraftstoff-Steuerteil der Brenngas-Injektoreinheit zu versorgen, insoweit die Hubsteuerbarkeit der Düsennadel der Brenngas-Injektoreinheit zu ermöglichen bzw. zu gewährleisten. Über die Flüssigkraftstoffversorgungseinrichtung (und den Steuerteil) kann insoweit ein zweites (Kraftstoff-) Druckniveau (Flüssigkraftstoffdruckniveau) an der Brenngas-Injektoreinheit eingestellt werden, d.h. im Flüssigkraftstoff -Steuerteil desselben.

Bevorzugt weist das erfindungsgemäße Dual-Fuel-Kraftstoffeinspritzsystem weiterhin auch wenigstens eine Flüssigkraftstoff-Injektoreinheit auf. Die Flüssigkraftstoff-Injektoreinheit kann ebenfalls über die Flüssigkraftstoffversorgungseinrichtung zu deren Steuerung und/oder für das Ausbringen (Einspritzvorgang) von Flüssigkraftstoff mit druckbeaufschlagtem Flüssigkraftstoff versorgt werden. Analog zu der Brenngas-Injektoreinheit kann eine solche Flüssigkraftstoff-Injektoreinheit ebenfalls einen Flüssigkraftstoff-Steuerteil aufweisen, im Unterschied zu der Brenngas-Injektoreinheit weiterhin einen Flüssigkraftstoff-Düsenteil.

Gekennzeichnet ist das erfindungsgemäß vorgeschlagene Dual-Fuel-Kraftstoffeinspritzsystem dadurch, dass die Brenngas-Injektoreinheit einen Leckagesammelraum definiert bzw. aufweist. Über den Leckagesammelraum (i.e. durch diesen hindurch bzw. sich durch diesen hindurch erstreckend) ist hierbei ein Leckagepfad (an der Brenngas-Injektoreinheit) geführt, welcher Leckagepfad sich ausgehend von dem Flüssigkraftstoff-Steuerteil in den Gasdüsenteil (hinein) erstreckt.

Der Leckagepfad weist insoweit einen ersten Pfadabschnitt auf, welcher vom Flüssigkraftstoff-Steuerteil zum Leckagesammelraum führt, wobei über den ersten Pfadabschnitt Flüssigkraftstoffleckage in den Leckagesammelraum verbringbar ist. Über einen zweiten Pfadabschnitt des Leckagepfads, welcher sich vom Leckagesammelraum zum Gasdüsenteil erstreckt, kann (Brenn)Gasleckage in den Leckagesammelraum eintreten. Einen dritten Pfadabschnitt bildet der Leckagesammelraum, über welchen der erste und zweite Pfadabschnitt kommunizieren. Bevorzugt ist der Leckagesammelraum als Ringraum gebildet, welcher die Gas-Düsennadel insbesondere umgibt, bevorzugt z.B. in einem längsmittleren Bereich der Gas-Düsennadel.

Weiterhin ist das Dual-Fuel-Kraftstoffeinspritzsystem dadurch gekennzeichnet, dass es eine Druckreguliervorrichtung aufweist, mittels welcher ein definiertes Druckniveau in dem Leckagesammelraum einstellbar ist. Das heißt, mittels der Druckreguliervorrichtung kann ein drittes (Kraftstoff-)Druckniveau (Leckagedruckniveau) an der Brenngas-Injektoreinheit eingestellt werden, i.e. im Leckagesammelraum derselben. Die Druckreguliervorrichtung kann für die Einstellung eines definierten Druckniveaus bevorzugt ein Druckregelventil aufweisen, zum Beispiel ein aktives oder passives.

Die Druckreguliervorrichtung - welche extern oder intern an einem Injektor mit der Brenngas-Injektoreinheit bereitgestellt sein kann - kann für die Einstellung eines definierten Druckniveaus in dem Leckagesammelraum weiterhin eine Kommunikationsverbindung mit dem Leckagesammelraum inbegreifen. Bevorzugt ist über die Druckreguliervorrichtung Leckage aus dem Leckagesammelraum insbesondere auch absteuerbar.

Das derart ausgestaltete Dual-Fuel-Kraftstoffeinspritzsystem nach der Erfindung ermöglicht vorteilhaft eine Behandlung bzw. Steuerung der Leckage, welche - insbesondere der Qualität eines jeweiligen verwendeten Flüssigkraftstoffs Rechnung tragend - variabel gestaltet werden kann.

Zum Beispiel kann Flüssigkraftstoffleckage durch Einstellung eines ersten definierten Druckniveaus im Leckagesammelraum, welches insbesondere über einem Gas-Versorgungsdruckniveau liegt (relativer Überdruck), erfindungsgemäß entlang des Leckagepfads in den Gasdüsenteil gezwungen werden und dort mitsamt dem Brenngas ausgedüst werden (insbesondere Zündstrahlbetrieb mit Dieselkraftstoff; als Aerosol), wobei vorteilhaft keine Mischleckage anfällt, die Zündwilligkeit des Brenngases daneben vorteilhaft erhöht wird und eine Trennung insoweit in wünschenswerter Weise nicht erforderlich ist.

Alternativ kann z.B. Flüssigkraftstoffleckage bei Einstellung eines zweiten Druckniveaus (insbesondere Zündstrahlbetrieb mit Schweröl oder Biokraftstoff) im Leckagesammelraum, welches insbesondere unter einem Gas-Versorgungsdruckniveau liegt (relativer Unterdruck), an dem Eintritt in den Gasdüsenteil gehindert werden, insbesondere z.B. in Verbindung mit einer Absteuerfunktionalität der Druckreguliervorrichtung. Mithin kann bei Verwendung von Flüssigkraftstoffen schlechter Qualität wie im Falle von Schweröl oder Biokraftstoff auf diese Weise z.B. ein nachteiliges Verkoken der Düsenöffnungen des Gasdüsenteils (welches ansonsten bei Eintritt von Schweröl (Biokraftstoff) in den Gasdüsenteil auftreten könnte) vermieden werden.

Bei einer besonders bevorzugten Ausgestaltung des vorgeschlagenen Dual-Fuel-Kraftstoffeinspritzsystems - einhergehend mit vorteilhaft einfacher Handhabung von Mischleckage - weist die Flüssigkraftstoffversorgungseinrichtung eine Niederdruckpumpe (Vorförderpumpe) und eine Hochdruckpumpe (zur Bereitstellung hochdruckbeaufschlagten Flüssigkraftstoffs) auf. Hierbei ist das Kraftstoffeinspritzsystem eingerichtet, aus dem Leckagesammelraum mittels der Druckreguliervorrichtung abgesteuerte Leckage in eine Strömungsverbindung der Niederdruckpumpe mit der Hochdruckpumpe zwischen denselben einzuleiten.

Gemäß dieser Ausgestaltung des Dual-Fuel-Kraftstoffeinspritzsystems, bei welcher das in der Mischleckage (aus dem Leckagesammelraum) « gefangene » Gas unmittelbar vor die Hochdruckpumpe geführt wird, wird das in der Leckage gelöste Gas durch die Hochdruckpumpe - ohne baulichen Zusatzaufwand - vorteilhaft (wieder)verdichtet. Durch die hierbei bewirkte Druckaufprägung wird der Austritt des Gases aus dem Flüssigkraftstoff somit vorteilhaft vermieden, mit der Folge, dass der gasleckagebehaftete Flüssigkraftstoff in dem Dual-Fuel-Kraftstoffeinspritzsystem bzw. der Flüssigkraftstoffversorgungseinrichtung unproblematisch rezirkulieren bzw. wiederverwendet werden kann, insbesondere für Flüssigkraftstoff-Einspritzvorgänge. Vorteilhaft ist ein kostenintensiver Gasseparator somit entbehrlich.

Weitere bevorzugte Ausgestaltungen des erfindungsgemäßen Dual-Fuel-Kraftstoffeinspritzsystems sehen vor, dass der Leckagesammelraum mittels ein oder mehrerer Abstreifelemente gebildet bzw. definiert ist, welche gegen die Gas-Düsennadel wirken. Mittels der Leckageabstreifelemente kann die zuverlässige Führung der Leckagemengen in den Leckagesammelraum hinein bewirkt werden, diese darin weiterhin förderlich gefangen werden.

Im Rahmen der Erfindung ist auch vorgesehen, das Dual-Fuel-Kraftstoffeinspritzsystem derart auszugestalten, dass die Gas-Injektoreinheit eine Dichtung aufweist, mittels welcher die Gas-Düsennadel gegen eine Nadelführung der Gas-Injektoreinheit gedichtet ist. Die Dichtung, insbesondere in Form einer Ringdichtung, weiterhin insbesondere in Form einer Gleitdichtung, ist insbesondere in Niederdruckumgebung vorteilhaft geeignet, den Übertritt von Flüssigkraftstoffleckage in den Gasdüsenteil am zweiten Pfadabschnitt zu hemmen.

Erfindungsgemäß weist der Flüssigkraftstoff-Steuerteil eine Ventilvorrichtung auf, über welche die Kommunikation des Leckagepfads mit der Flüssigkraftstoffversorgungseinrichtung unterbrechbar und herstellbar ist. Bei der erfindungsgemäßen Ausgestaltung weist der Flüssigkraftstoff-Steuerteil einen Steuerraum auf, ausgehend von welchem der Leckagepfad hin zum Gas-Düsenteil führt und der Steuerraum ist über die Ventilvorrichtung von der Flüssigkraftstoffversorgung anströmseitig abkoppelbar. Die Ventilvorrichtung kann ein Pilotventil umfassen, z.B. auch ein weiteres Ventil, z.B. ein Absperrventil.

Bevorzugte Ausführungsformen der Erfindung sehen weiterhin vor, dass das Dual-Fuel-Kraftstoffeinspritzsystem ein Common-Rail-Kraftstoffeinspritzsystem ist, wobei die Flüssigkraftstoffversorgungseinrichtung und/oder die Gasversorgungseinrichtung je in einer Common-Rail-Umgebung implementiert sein können. Weiterhin ist bevorzugt vorgesehen, dass eine jeweilige Brenngas-Injektoreinheit zusammen mit einer Flüssigkraftstoff-Injektoreinheit je gemeinsam in einem Dual-Fuel-Injektor integriert ist, zum Beispiel die Brenngas-Injektoreinheit koaxial mit einer Flüssigkraftstoff-Injektoreinheit oder achsparallel zu einer solchen im Dual-Fuel-Injektor aufgenommen. Denkbar ist jedoch auch, die jeweilige Brenngas-Injektoreinheit separiert von der Flüssigkraftstoff-Injektoreinheit auszubilden.

Vorgeschlagen wird im Rahmen der Erfindung auch ein Verfahren zur Ausführung mit einem wie vorstehend beschriebenen Dual-Fuel-Kraftstoffeinspritzsystem.

Bei dem Verfahren wird in einer ersten Zündstrahl-Betriebsart des Dual-Fuel-Kraftstoffeinspritzsystems das Druckniveau im Leckagesammelraum mittels der Druckreguliervorrichtung auf einen Wert größer oder gleich einem Gas-Versorgungsdruckniveau (welches durch die Brenngasversorgungseinrichtung am Gasdüsenteil bereitgestellt ist) eingestellt (relativer Gleich- oder Überdruck). Diese erste Betriebsart kann zum Beispiel vorteilhaft für einen Diesel-Zündstrahlbetrieb vorgesehen sein, wobei Flüssigkraftstoffleckage (Diesel) durch das erhöhte Druckniveau am Leckagesammelraum in Richtung zum Gasdüsenteil entlang des Leckagepfads gedrängt wird, mithin dort gemeinsam mit dem Brenngas ausgedüst werden kann.

In einer zweiten Zündstrahl-Betriebsart des Dual-Fuel-Kraftstoffeinspritzsystems gemäß dem erfindungsgemäßen Verfahren wird das Druckniveau im Leckagesammelraum mittels der Druckreguliervorrichtung auf einen Wert kleiner einem Gas-Versorgungsdruckniveau am Gas-Düsenteil eingestellt (relativer Unterdruck). Hierdurch kann - insbesondere einhergehend mit einer Leckageableitung aus dem Leckagesammelraum - sowohl Flüssigkraftstoffleckage als auch Gasleckage über den Leckagepfad in den Leckagesammelraum eintreten und von dort abgesteuert werden, erfindungsgemäß bevorzugt via die Druckreguliervorrichtung. Hierdurch wird vorteilhaft vermieden, dass Flüssigkraftstoff in den Gasdüsenteil eintritt und dort gegebenenfalls zu einer Verkokung der Spritzlöcher führt (zum Beispiel bei einem Betrieb mit qualitativ schlechterem Flüssigkraftstoff wie z.B. Schweröl).

In dieser zweiten Zündstrahlbetriebsart ist insbesondere vorgesehen, abgesteuerte Leckage aus dem Leckagesammelraum in eine Strömungsverbindung der Flüssigkraftstoffversorgungseinrichtung einzuleiten, welche eine Niederdruckpumpe und eine Hochdruckpumpe der Flüssigkraftstoffversorgungseinrichtung verbindet, siehe auch oben. Hierdurch kann ein Trennen der Mischleckage in Gas und Flüssigkraftstoff vorteilhaft entfallen.

Eine Ausgestaltung des erfindungsgemäßen Verfahrens sieht weiterhin vor, dass bei einem Umschalten des Dual-Fuel-Kraftstoffeinspritzsystems von einem Zündstrahlbetrieb auf einen (ausschließlichen) Flüssigkraftstoffbetrieb der Leckagesammelraum über die Druckreguliervorrichtung durch Absteuern von Leckage in einem ersten Schritt entlastet wird während ein erstes Gas-Druckniveau (insbesondere Betriebsdruckniveau) am Gas-Düsenteil versorgungsseitig aufrechterhalten wird, nachfolgend in einem zweiten Schritt das Absteuern via die Druckreguliervorrichtung unterbunden bzw. dauerhaft gestoppt wird, und anschließend in einem dritten Schritt ein Gas-Versorgungsdruckniveau unter das erste Druckniveau abgesenkt wird.

Alternativ kann im Rahmen des erfindungsgemäßen Verfahrens vorgesehen sein, dass bei einem Umschalten des Kraftstoffeinspritzsystems von einem Zündstrahlbetrieb auf (ausschließlichen) Flüssigkraftstoffbetrieb in einem ersten Schritt eine Kommunikationverbindung des Leckagesammelraums mit der Strömungsverbindung der Niederdruckpumpe mit der Hochdruckpumpe über die Druckreguliervorrichtung und/oder eine nachgeordnete Absteuerleitung hergestellt wird (fortdauernd), und nachfolgend in einem zweiten Schritt ein Gas-Versorgungsdruckniveau am Gasdüsenteil eingestellt wird, welches gleich oder größer dem Druckniveau im Strömungsweg zwischen Niederdruckpumpe und Hochdruckpumpe ist.

Im Rahmen eines wie vorstehend beschriebenen jeweiligen Umschaltens wird vorteilhaft vermieden, dass der Gasdüsenteil auf unbeabsichtigte Weise mit Flüssigkraftstoff über den Leckagepfad befüllt wird. Vorgesehen ist insoweit, vor dem jeweiligen ersten Schritt die Kommunikation des Leckagepfads mit der Flüssigkraftstoffversorgungseinrichtung zu unterbrechen (via die Ventilvorrichtung).

Vorgeschlagen wird erfindungsgemäß auch eine Brennkraftmaschine der eingangs beschriebenen Art mit einem wie vorstehend erläuterten Dual-Fuel-Kraftstoffeinspritzsystem. Angemerkt sei hierbei, dass ein erfindungsgemäßes Dual-Fuel-Kraftstoffeinspritzsystem selbstverständlich eine Mehrzahl von Brenngas-Injektoreinheiten (und Flüssigkraftstoff-Injektoreinheiten) aufweisen kann, wobei den mehreren Brenngas-Injektoreinheiten eine oder mehrere Druckreguliervorrichtungen zugeordnet sein können.

Weitere Merkmale und Vorteile der Erfindung ergeben sich aus der nachfolgenden Beschreibung von Ausführungsbeispielen der Erfindung, anhand der Figuren der Zeichnungen, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

Bevorzugte Ausführungsformen der Erfindung werden nachfolgend anhand der beigefügten Zeichnungen näher erläutert. Es zeigen:
- Fig. 1: exemplarisch und schematisch ein Dual-Fuel-Kraftstoffeinspritzsystem gemäß einer ersten möglichen Ausführungsform der Erfindung, mit welchem das erfindungsgemäße Verfahren ausführbar ist.
- Fig. 2: exemplarisch und schematisch eine den Brenngas-Injektor mit einer Druckreguliervorrichtung einer weiteren möglichen Ausgestaltung veranschaulichende Ansicht des Dual-Fuel-Kraftstoffeinspritzsystems.
- Fig. 3: exemplarisch und schematisch eine den Brenngas-Injektor mit einer Druckreguliervorrichtung einer noch weiteren möglichen Ausgestaltung veranschaulichende Ansicht des Dual-Fuel-Kraftstoffeinspritzsystems.

In der nachfolgenden Beschreibung und den Zeichnungen entsprechen gleichen Bezugszeichen Elemente gleicher oder vergleichbarer Funktion.

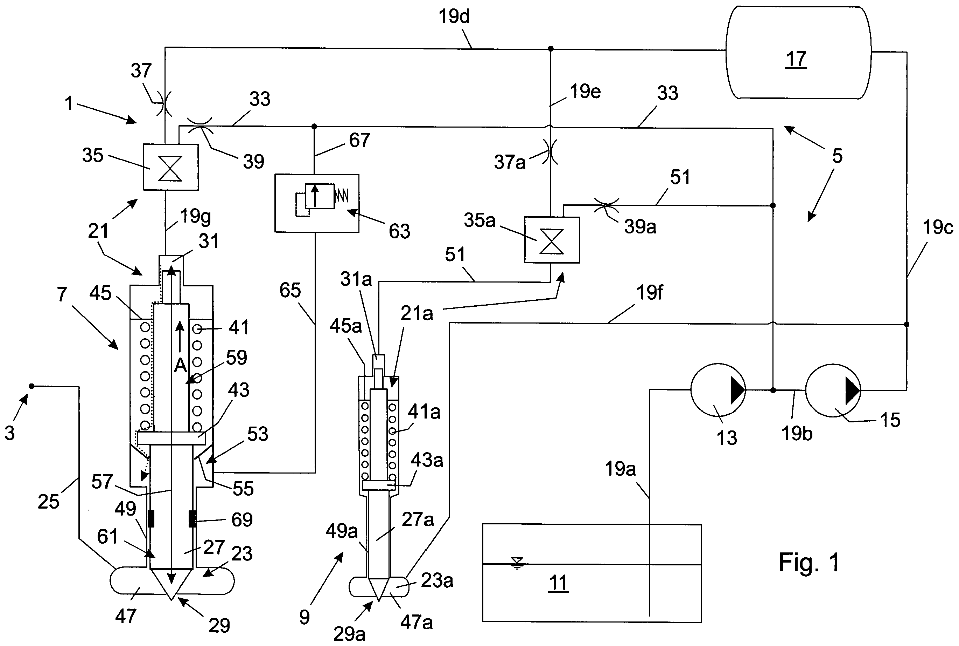

**Fig. 1** zeigt exemplarisch ein Dual-Fuel-Kraftstoffeinspritzsystem 1 für eine Brennkraftmaschine.

Das Dual-Fuel-Kraftstoffeinspritzsystem 1 ist für den Betrieb mit Brenngas, zum Beispiel Erdgas, Biogas etc., im Zündstrahlverfahren eingerichtet, wozu das Dual-Fuel-Kraftstoffeinspritzsystem 1 bzw. eine damit gebildete Brennkraftmaschine eine Brenngasversorgungseinrichtung 3 aufweist. Für die Bereitstellung des Zündstrahls oder auch für einen reinen Flüssigkraftstoffbetrieb, insbesondere mit Dieselkraftstoff, Schweröl oder Biokraftstoff (Bio-Öl), weist das Dual-Fuel-Kraftstoffeinspritzsystem 1 bzw. eine damit gebildete Brennkraftmaschine daneben eine Flüssigkraftstoffversorgungseinrichtung 5 auf.

Die Brenngasversorgungseinrichtung 3 ist eingerichtet, Brenngas, insbesondere mit einem vorbestimmten Druckniveau, an wenigstens eine Brenngas-Injektoreinheit 7 des Dual-Fuel-Kraftstoffeinspritzsystem 1 zu versorgen, wozu die Brenngasversorgungseinrichtung 3 (neben einer Kontrolleinrichtung) bevorzugt einen Brenngasvorrat und eine Verdichtereinheit aufweist (nicht dargestellt), alternativ z.B. eine Flüssiggasversorgung mit Hochdruckpumpe und Verdampfer (nicht dargestellt). Bei Ausbildung der Brenngasversorgungseinrichtung 3 als Common-Rail-System kann die Brenngasversorgungseinrichtung 3 zum Beispiel auch einen Druckgassammelbehälter (rail) aufweisen, ausgehend von welchem eine jeweilige Brenngas-Injektoreinheit 7 mit Brenngas versorgbar ist.

Analog zu der Brenngasversorgungseinrichtung 3 ist die Flüssigkraftstoffversorgungseinrichtung 5 eingerichtet, Flüssigkraftstoff für den Zündstrahlbetrieb oder einen reinen Flüssigkraftstoffbetrieb an wenigstens eine Flüssigkraftstoff-Injektoreinheit 9 des Dual-Fuel-Kraftstoffeinspritzsystems 1 zu versorgen. Daneben ist die Flüssigkraftstoffversorgungseinrichtung 5 auch eingerichtet, Flüssigkraftstoff an die wenigstens eine Brenngas-Injektoreinheit 7 zu versorgen, d.h. für eine Steuerung derselben (Düsennadel-Hubsteuerung).

Die bevorzugt als Common-Rail-System gebildete Flüssigkraftstoffversorgungseinrichtung 5 umfasst wenigstens einen Flüssigkraftstoffvorrat 11 (Schweröl, Bioöl, Diesel) aus welchem ein jeweiliger Brennstoff entnehmbar ist (gegebenenfalls auch eine Umschaltvorrichtung für ein Wechseln zwischen verschiedenen Flüssigkraftstoffvorräten), eine nachgeordnete Niederdruckpumpe 13 sowie eine dieser wiederum nachgeordneten Hochdruckpumpe 15, welche den mittels der Pumpenanordnung 13, 15 hochdruckbeaufschlagten Flüssigkraftstoff in ein bereitgestelltes Rail 17 der Flüssigkraftstoffversorgungseinrichtung 5 fördern. Ausgehend von dem Sammeldruckspeicher 17 wird der Flüssigkraftstoff nachfolgend an die Injektoreinheiten 7, 9 bereitgestellt. Für die Bereitstellung des Flüssigkraftstoffs weist die Flüssigkraftstoffversorgungseinrichtung 5 weiterhin Leitungsverbindungen 19a, b, c, d, e, f auf.

Eine jeweilige Brenngas-Injektoreinheit 7 des Dual-Fuel-Kraftstoffeinspritzsystems 1 umfasst einen Flüssigkraftstoff-Steuerteil 21 (an welchen Flüssigkraftstoff via die Flüssigkraftstoffversorgungseinrichtung 5 versorgbar ist, Leitung 19d) und einen Gasdüsenteil 23, an welchen Brenngas (via die Brenngasversorgungseinrichtung 3 und eine Strömungsverbindung 25) versorgbar ist.

Ein jeweiliger Flüssigkraftstoff-Steuerteil 21 ist dazu vorgesehen, eine (Gas-)Düsennadel 27 der zugehörigen Brenngas-Injektoreinheit 7 über an den Flüssigkraftstoff-Steuerteil 21 versorgten Flüssigkraftstoff hubzusteuern, i.e. um derart Brenngas korrespondierend mit einem beabsichtigten Einspritzvorgang aus einer Düsenanordnung 29 (Spritzlöcher) des Gasdüsenteils 23 in einen Brennraum auszudüsen.

Hierzu umfasst ein jeweiliger Flüssigkraftstoff-Steuerteil 21 einen Steuerraum 31, in welchen seitens der Flüssigkraftstoffversorgungseinrichtung 5 bereitgestellter, hochdruckbeaufschlagter Flüssigkraftstoff gesteuert einbringbar ist (über die Strömungsverbindung 19d und eine Strömungsverbindung des Steuerteils 19g) und aus welchem Flüssigkraftstoff gesteuert ausbringbar ist, das heißt als Leckage (über die Strömungsverbindung 19g und die Leckageleitung 33).

Im Zuge des gesteuerten Ein- und Ausbringens von Flüssigkraftstoff in den Steuerraum 31, mithin zur Hubsteuerung der Gas-Düsennadel 27, wird düsenfern ein Druck an der Gas-Düsennadel 27 bzw. in der Brenngas-Injektoreinheit 7 eingestellt, d.h. ein erstes Kraftstoffdruckniveau (Flüssigkraftstoff-Druckniveau), welcher bzw. welches eine Kraft auf die Gas-Düsennadel 27 in Schließrichtung zur Folge hat. Für die Steuerung des Ein- und Ausbringens von Flüssigkraftstoff in den Steuerraum 31 umfasst der Flüssigkraftstoff-Steuerteil 21 weiterhin wenigstens eine Ventil Vorrichtung 35 (sowie eine Zulaufdrossel 37 und eine Ablaufdrossel 39). Eine solche Ventilvorrichtung 35 kann bevorzugt ein Pilotventil umfassen, zum Beispiel in Form eines 2/2-Wege-Ventils oder eines 3/2-Wege-Ventils. Ein weiteres Ventil kann im Rahmen der Ventilvorrichtung 35 unterstützend vorgesehen sein, z.B. für ein selektives Abkoppeln von der Hochdruckleitung 19d.

Mit dem Flüssigkraftstoff-Steuerteil 21 im Wirkverbund steht weiterhin eine Düsenfeder 41, welche die Gas-Düsennadel 27 ebenfalls in Schließrichtung drängt (in Richtung eines Ventilsitzes). Die Düsenfeder 41 kann einenends an einer Schulter 43 der Gas-Düsennadel 27 abgestützt sein, andernends zum Beispiel gegen ein festgelegtes Führungselement 45 der Gas-Düsennadel 27, zum Beispiel eine Nadelführungshülse.

Der Gasdüsenteil 23 der Brenngas-Injektoreinheit 7 umfasst einen Düsenraum 47, in welchen Brenngas seitens der Brenngasversorgungseinrichtung 3 mit einem vorbestimmten Versorgungsdruckniveau einbringbar ist, d.h. mit einem zweiten Kraftstoffdruckniveau (Brenngas-Druckniveau) an der Brenngas-Injektoreinheit 7. Ferner umfasst der Gasdüsenteil 23 vorstehend erwähnte Gas-Düsenanordnung 29, deren Kommunikationsverbindung mit dem Düsenraum 47 im Zuge der Hubsteuerung der Gas-Düsennadel 23 selektiv herstellbar ist.

Sich vom Gasdüsenteil 23 in der Brenngas-Injektoreinheit 7 axial zum düsenfernen Ende derselben hin wegerstreckend ist eine Axialbohrung 49 gebildet, in welcher die Gas-Düsennadel 27 axial verschieblich über eine Länge geführt und aufgenommen ist.

Nachfolgend wird (kursorisch) noch auf die Hubsteuerung der Gas-Düsennadel 27 im Rahmen eines Brenngas-Einspritzbetriebs eingegangen.

Für die Offensteuerung der Düsennadel 27 aus der in Fig. 1 dargestellten Schließstellung, in welcher sowohl Brenngas-Druck seitens des Düsenraums 47 in Öffnungsrichtung (Pfeil A) gegen die Düsennadel 27 wirkt als auch der in Schließrichtung wirkende Druck seitens des Steuerraums 31 und der Schließfeder 41, wird das Schließkräftegleichgewicht an der Gas-Düsennadel 27 aufgelöst, indem der Flüssigkraftstoff-Steuerteil 21 über Entlastung des Steuerraums 31 die Schließkraft auf die Düsennadel 27 reduziert (über das Absteuern von Flüssigkraftstoff an die Leckageleitung 33 via die Ventilvorrichtung 35 und die Ablaufdrossel 39). Hierdurch hebt die Gas-Düsennadel 27 aus dem Sitz ab und Brenngas kann über die Düsenanordnung 29 ausgebracht werden. Für die Beendigung eines Einspritzvorgangs wird der Steuerraum 31 über den Flüssigkraftstoff-Steuerteil 21 wieder belastet, insbesondere hierbei das Absteuern beendet und der Steuerraum 31 wieder mit hochdruckbeaufschlagten Kraftstoff befüllt. Die Gas-Düsennadel 27 kehrt in ihren Sitz zurück.

Eine jeweilige Flüssigkraftstoff-Injektoreinheit 9 ist bevorzugt analog zu der vorstehend beschriebenen Brenngas-Injektoreinheit 7 gebildet und folgt weiterhin bevorzugt deren Wirkprinzip. Die Komponenten der Flüssigkraftstoff-Injektoreinheit 9 sind im Rahmen der Bezugszeichenvergabe insoweit in gleicher Weise wie jene der Brenngas-Injektoreinheit 7 nummeriert, jedoch mit dem Zusatz « a » versehen.

Eine jeweilige Flüssigkraftstoff-Injektoreinheit 9 weist im Unterschied zur Gas-Injektoreinheit 7 einen Flüssigkraftstoff-Düsenteil 23a mit einem Düsenraum 47a auf, an welchen hochdruckbeaufschlagter Flüssigkraftstoff über die Flüssigkraftstoffversorgungseinrichtung 5 (Leitung 19f) versorgt wird. Die Düsenanordnung 29a, deren Kommunikation mit dem Düsenraum 41a über die Hubsteuerung der Düsennadel 27a selektiv herstellbar ist, ist insofern für das Ausbringen von Flüssigkraftstoff ausgelegt. Abgesteuerte Leckage aus dem Steuerraum 31a wird über die Strömungsverbindung 51 in die Leitung 33 abgeführt.

Mit Bezug auf die Injektoreinheiten 7, 9 ist bevorzugt vorgesehen, eine jeweilige Brenngas-Injektoreinheit 7 je zusammen mit einer Flüssigkraftstoff-Injektoreinheit 9 in einem einzigen Dual-Fuel-Injektor zusammenzuführen, zum Beispiel in einer koaxialen oder achsparallelen Anordnung in Bezug auf die Düsennadeln 23, 23a derselben.

Erfindungsgemäß definiert die Brenngas-Injektoreinheit 7 einen Leckagesammelraum 53. Der Leckagesammelraum 53 ist bevorzugt um einen längsmittleren Bereich der Gas-Düsennadel 27 herum gebildet, i.e. bevorzugt als Ringraum, welcher die Düsennadel 27 in Umfangsrichtung umgibt. Bevorzugt ist der Leckagesammelraum 53 mittels wenigstens eines Abstreifelements 55 definiert, welches gegen die Gas-Düsennadel 27 wirkt und dazu vorgesehen ist, Leckage zuverlässig in den Leckagesammelraum 53 zu überführen, insbesondere darin auch zu fangen.

Eine entsprechende Schrägstellung des wenigstens einen Abstreifelements 55 unterstützt hierbei vorteilhaft, siehe z.B. Fig. 1.

Über den derart gebildeten Leckagesammelraum 53 ist erfindungsgemäß ein Leckagepfad 57 geführt, welcher sich von dem Flüssigkraftstoff-Steuerteil 21 in den Gasdüsenteil 23 erstreckt. Der Leckagepfad 57 weist hierbei einen ersten Abschnitt 59 auf, welcher vom Steuerraum 31 entlang der Gas-Düsennadel 27 durch die Brenngas-Injektoreinheit 7 führt und in den Leckagesammelraum 53 einmündet, s. gestrichelten Pfeil in Fig. 1. Den ersten Pfadabschnitt 59 setzt ein zweiter Pfadabschnitt fort, welchen der Leckagesammelraum 53 bildet, welchen zweiten Pfadabschnitt 53 wiederum ein dritter Pfadabschnitt 61 fortsetzt, welcher vom Leckagesammelraum 53 (entlang der Axialbohrung 49 bzw. der Gas-Düsennadel 27) in den Gasdüsenteil 23 führt, insbesondere in den Gasdüsenraum 47. Über den Leckagepfad 53 kommunizieren insoweit der Flüssigkraftstoff-Steuerteil 21 und der Gasdüsenteil 23 miteinander.

Wie zum Beispiel in Fig. 1 weiter veranschaulicht, weist das Dual-Fuel-Kraftstoffeinspritzsystem 1 weiterhin eine Druckreguliervorrichtung 63 auf, mittels welcher ein definiertes Druckniveau in dem Leckagesammelraum 53 einstellbar ist, d.h. ein drittes Kraftstoffdruckniveau an der Brenngas-Injektoreinheit 7 (Leckagedruckniveau). Hierdurch ist vorteilhaft eine variable Leckageführung an der Gasinjektoreinheit 7 ermöglicht.

Beispielsweise kann ein Druckniveau an dem Leckagesammelraum 53 mittels der Druckreguliervorrichtung 63 eingestellt werden, zum Beispiel bei einem Zündstrahlbetrieb unter Verwendung von Dieselkraftstoff, welches über dem Brenngas-Druckniveau im Gasdüsenteil 23 liegt. Über den ersten Pfadabschnitt 59 in den Leckagesammelraum 53 eintretende Flüssigkraftstoffleckage wird hierbei zum Gasdüsenteil 23 hin abgefördert, dort vorteilhaft als Aerosol (die Zündwilligkeit des Brenngases erhöhend) mit ausgedüst. Eine Behandlung von Mischleckage wird hierbei vorteilhaft entbehrlich.

Die Druckreguliervorrichtung 63 weist bevorzugt ein Druckregelventil auf, zum Beispiel ein aktives (angesteuertes) oder passives Druckregelventil. Weiterhin bevorzugt umfasst die Druckreguliervorrichtung 63 für die Einstellung eines definierten Druckniveaus in dem Leckagesammelraum 53 eine Kommunikationsverbindung 65 mit dem Leckagesammelraum 53. Die Druckreguliervorrichtung 63 ist bevorzugt als separate Vorrichtung im Dual-Fuel-Kraftstoffeinspritzsystem 1 bereitgestellt, zum Beispiel für eine einzige oder eine Mehrzahl von Brenngas-Injektoreinheiten 7.

Bevorzugte Ausführungsformen des Dual-Fuel-Kraftstoffeinspritzsystems 1 sehen vor, dass die Druckreguliervorrichtung 63 insbesondere auch zur Absteuerung von Leckage aus dem Leckagesammelraum 53 eingerichtet ist. Bevorzugt ist der Druckreguliervorrichtung 63 hierbei eine Absteuerleitung 67 (33) zugeordnet, insbesondere in Kommunikation mit der Flüssigkraftstoff-Niederdruckseite. Durch die Möglichkeit, Leckage aus dem Leckagesammelraum 53 über die Druckreguliervorrichtung 63 abziehen zu können, werden die Leckagebehandlungsmöglichkeiten im Dual-Fuel-Kraftstoffeinspritzsystem 1 vorteilhaft erweitert.

Besonders bevorzugt und wie auch in Fig. 1 dargestellt, ist das Dual-Fuel-Kraftstoffeinspritzsystem 1 vorteilhaft eingerichtet, Leckage aus dem Leckagesammelraum 53, welche insbesondere mittels der Druckreguliervorrichtung 63 abgesteuert wird, in die Strömungsverbindung 19b der Niederdruckpumpe 13 mit der Hochdruckpumpe 15 zwischen denselben einzuleiten. Durch diese Weiterbildung der Erfindung wird es ermöglicht, im Leckagesammelraum 53 gebildete Mischleckage im Kraftstoffkreis der Flüssigkraftstoffversorgungseinrichtung 5 unter einem Druck zu « fangen », welcher notwendig ist, ein Ausgasen des (Mischleckage)-Brenngases aus dem Flüssigkraftstoff zu vermeiden (sowie ein rasches Lösen des Gases im Flüssigkraftstoff zu ermöglichen) und das Brenngas der Mischleckage zur Mitausdüsung durch die Injektoreinheiten 9 rezirkulieren zu lassen. Hierdurch wird eine Mischleckagebehandlung, zum Beispiel im Sinne einer Gasseparation, ebenfalls vorteilhaft entbehrlich. Besonders vorteilhaft ist hierbei der Aspekt, dass die Mischleckage bei der vorgeschlagenen Einleitung zwischen Nieder 13- und Hochdruckpumpe 15 nur ein Niederdruck-Druckniveau aufzuweisen braucht, welches geringfügig über dem der Druckseite der Niederdruckpumpe 13 liegt. Ein solches kann mittels der Druckreguliervorrichtung 63 vorteilhaft unaufwändig eingeregelt werden.

Bevorzugte Ausgestaltungen des Dual-Fuel-Kraftstoffeinspritzsystems 1 sehen weiterhin vor, dass eine jeweilige Gas-Injektoreinheit 7 eine Dichtung 69 aufweist, mittels welcher die Gas-Düsennadel 27 gegen deren Nadelführung (Axialbohrung 49) gedichtet ist. Eine solche insbesondere als Gleitdichtung ausgeführte Dichtung 69 vermag insbesondere in Niederdruck-Umgebungen die überströmenden Leckagemengen vorteilhaft zu vermeiden, zumindest deutlich zu reduzieren.

Zur Ausführung mit dem vorstehend beschriebenen Dual-Fuel-Kraftstoffeinspritzsystem 1 wird erfindungsgemäß auch ein Verfahren vorgeschlagen, welches nachfolgend näher erläutert wird.

Im Rahmen des Verfahrens wird bei einer ersten Zündstrahl-Betriebsart des Dual-Fuel-Kraftstoffeinspritzsystems 1, insbesondere einer Zündstrahlbetriebsart unter Verwendung von Zündstrahlkraftstoff in Form von Dieselkraftstoff, das Druckniveau im Leckagesammelraum 53 mittels der Druckreguliervorrichtung 63 hierbei auf einen Wert größer oder gleich einem Gas-Versorgungsdruckniveau am Gasdüsenteil 23 eingestellt. Durch diesen eingestellten relativen Gleich- oder Überdruck, welcher zum Beispiel im Bereich von 0 bis 10 bar liegen kann, wird einerseits verhindert, dass Brenngas über den dritten Pfadabschnitt 61 in den Leckagesammelraum 53 eintritt, andererseits die (via den Flüssigkraftstoff-Steuerteil 21 über den ersten Pfadabschnitt 59 in den Leckagesammelraum 53 zugeführte) Flüssigkraftstoffleckage zur Mitausdüsung durch die Brenngas-Injektoreinheit 7 in den Gasdüsenteil 23 gedrängt (wodurch insbesondere bei Diesel-Zündstrahlbetrieb die Zündwilligkeit des Brenngases vorteilhaft erhöht werden kann).

Verfahrensgemäß wird in einer zweiten Zündstrahl-Betriebsart des Dual-Fuel-Kraftstoffeinspritzsystems 1, insbesondere einer Zündstrahlbetriebsart unter Verwendung von Zündstrahlkraftstoff in Form von Schweröl oder Bioöl (welches gegenüber Dieselkraftstoff mit einer minderen Qualität einhergeht), das Druckniveau im Leckagesammelraum 53 mittels der Druckreguliervorrichtung 63 auf einen Wert kleiner einem Gas-Versorgungsdruckniveau am Gas-Düsenteil 23 eingestellt.

Gemäß dieser Betriebsart, bei welcher der Leckagesammelraum 53 mit relativem Unterdruck, welcher betragsmäßig im Bereich bis 10 bar liegen kann, beaufschlagt ist, wird die Bildung von Mischleckage im Leckagesammelraum 53 ermöglicht, vorteilhaft kann - insbesondere bei Absteuern der Mischleckage (bevorzugt über die Druckreguliervorrichtung 63) - jedoch vermieden werden, dass der Flüssigkraftstoff in den Gasdüsenteil 23 gelangt, somit zum Beispiel in nachteiliger Weise zu einem Verkoken der Düsenöffnungen 29 führt. Die Mischleckage wird hierbei besonders bevorzugt in die Strömungsverbindung 19b der Niederdruckpumpe 13 mit der Hochdruckpumpe 15 zwischen denselben abgesteuert.

Gemäß einem ersten Aspekt des erfindungsgemäßen Verfahrens wird bei einem Umschalten des Dual-Fuel-Kraftstoffeinspritzsystems 1 von einem Zündstrahlbetrieb auf einen reinen Flüssigkraftstoffbetrieb der Leckagesammelraum 53 über die Druckreguliervorrichtung 63 in einem ersten Schritt entlastet (Absteuern von Leckage), wobei ein erstes Gas-Versorgungsdruckniveau (insbesondere Hochdruck-Niveau) am Gas-Düsenteil 23 aufrechterhalten wird. Voraus geht dem ersten Schritt bevorzugt ein Absperren der Flüssigkraftstoffversorgung an den Steuerraum 31, d.h. ein Abkoppeln des Leckagepfads 57 vom Flüssigkraftstoff-Hochdruckkreis 19d, wozu die Ventilvorrichtung 35 vorgesehen ist.

Somit kann bewirkt werden, dass der Leckagesammelraum 53 nach dem Absteuern der Leckage nur mehr mit Brenngas befüllt wird. Hierauf kann in einem zweiten Schritt das Absteuern via die Druckreguliervorrichtung 63 unterbunden bzw. dauerhaft gestoppt werden. In einem dritten Schritt kann das Brenngas-Versorgungsdruckniveau nunmehr unter das erste Gas-Versorgungsdruckniveau abgesenkt werden, insbesondere auf ein Niederdruck-Niveau. Ein unbeabsichtigtes Füllen des Gasdüsenteils 23 mit (im Sammelraum 53 verbliebenem (Rest-))Flüssigkraftstoff kann hierbei vorteilhaft verhindert werden, insbesondere unterstützt durch die in der nunmehr erzeugten Niederdruck-Umgebung zuverlässig wirkende Dichtung 69.

Alternativ kann gemäß einem zweiten Aspekt des Verfahrens vorgesehen sein, dass bei einem Umschalten des Dual-Fuel-Kraftstoffeinspritzsystems 1 von einem Zündstrahlbetrieb auf reinen Flüssigkraftstoffbetrieb in einem ersten Schritt zunächst eine Kommunikationsverbindung des Leckagesammelraums 53 mit der Strömungsverbindung 19b der Niederdruckpumpe 13 mit der Hochdruckpumpe 15 über die Druckreguliervorrichtung 63 geführt hergestellt wird (dauerhaft). Voraus geht dem ersten Schritt bevorzugt wiederum ein Absperren der Flüssigkraftstoffversorgung an den Steuerraum 31, d.h. ein Abkoppeln des Leckagepfads 57 vom Flüssigkraftstoff-Hochdruckkreis 19d, wozu wie vor die Ventilvorrichtung 35 vorgesehen ist.

In einem nachfolgenden zweiten Schritt wird nunmehr ein Gas-Versorgungsdruckniveau am Gasdüsenteil 23 eingestellt, welches gleich oder größer dem Druckniveau im Strömungsweg 19b zwischen Niederdruckpumpe 13 und Hochdruckpumpe 15 ist. Gemäß diesem Aspekt des Verfahrens kann das Füllen des Gasdüsenteils 23 mit Flüssigkraftstoff wiederum vorteilhaft vermieden werden, i.e. durch Aufrechterhalten eines geringfügig höheren Drucks (z.B. Δp = 5 bar) am Leckagesammelraum 53 als an der Druckseite der Niederdruckpumpe 13 wird einerseits sichergestellt, dass eventuelle Flüssigkraftstoffleckage kontinuierlich abgesteuert wird, andererseits kein Kraftstoff in rückwärtiger Richtung seitens der Druckreguliervorrichtung 63 in den Leckagesammelraum 53 eintreten kann.

Im Rahmen der Erfindung kann der Druck in der Strömungsverbindung 19b zwischen Niederdruckpumpe 13 und Hochdruckpumpe 15 beispielsweise einem Druckniveau von ca. 5 bis 15 bar entsprechen. Der Versorgungs-Gasdruck kann zum Beispiel im Bereich von 300 - 350 bar liegen, das Hochdruckniveau der Flüssigkraftstoffversorgungseinrichtung 5 zum Beispiel im Bereich von 2000 - 2500 bar.

Nachfolgend werden noch einige Beispiele für mögliche Ausgestaltungen der Druckreguliervorrichtung 63 dargestellt.

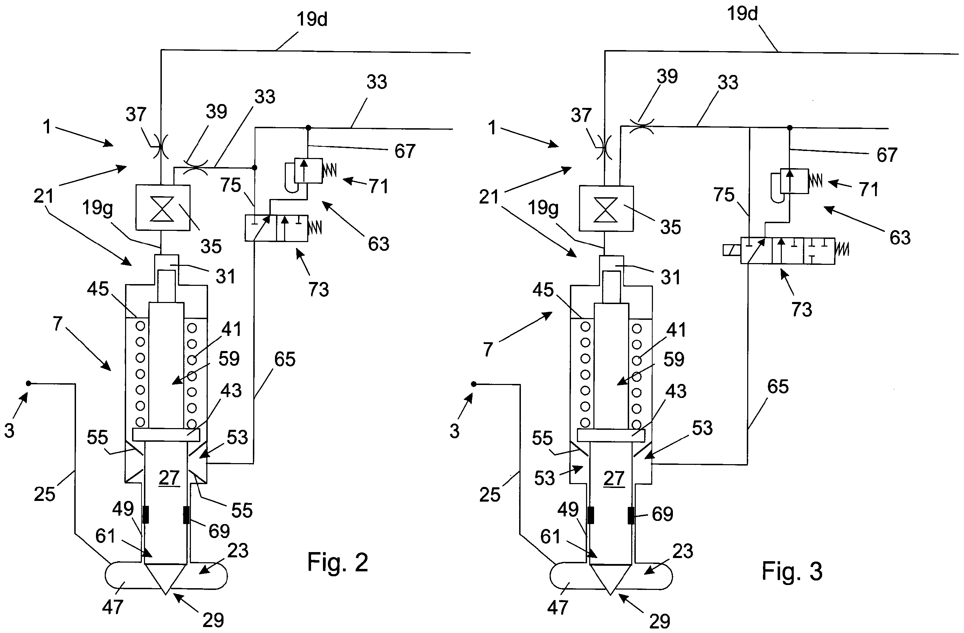

**Fig. 2** veranschaulicht eine Ausgestaltungsmöglichkeit des Dual-Fuel-Kraftstoffeinspritzsystems 1, gemäß welcher die Druckreguliervorrichtung 63 (zusätzlich zu einem Druckregler 71 oder Druckminderer) auch ein 3/2-Wege-Ventil 73 aufweist, über welches die Kommunikationsverbindung 65 der Druckreguliervorrichtung 63 mit dem Leckagesammelraum 53 geführt ist. Neben der Ansteuerung des Druckreglers 71 in der gezeigten Schaltstellung ist hierbei auch eine (schlagartige) Entlastung des Leckagesammelraums 53 durch selektives Aufsteuern eines Bypasszweigs 75, 33 ermöglicht (weitere Schaltstellung). Mittels einer solchen Druckreguliervorrichtung 63 kann ein Umschalten wie vorstehend beschrieben z.B. gemäß dem zweiten Aspekt des Verfahrens erfolgen.

**Fig. 3** zeigt eine Variante der Druckreguliervorrichtung 63, welche anstelle des vorstehend beschriebenen 3/2-Wege-Ventils ein 3/3-Wege-Ventil 73 aufweist. Neben einem Entlasten und einem Ansteuern des Druckreglers 71 kann hierbei auch das Absteuern der Leckage durch Absperren der Kommunikationsverbindung 65 unterbunden werden. Mittels einer derart ausgestalteten Druckreguliervorrichtung 63 kann ein Umschalten wie vorstehend beschrieben z.B. auch gemäß dem ersten Aspekt des Verfahrens erfolgen.

## Patentansprüche

1. Dual-Fuel-Kraftstoffeinspritzsystem (1) mit einer Brenngasversorgungseinrichtung (3) und einer Flüssigkraftstoffversorgungseinrichtung (5), aufweisend:
- eine Brenngas-Injektoreinheit (7) mit einem Flüssigkraftstoff-Steuerteil (21) und einem Gasdüsenteil (23), an welchen Brenngas versorgbar ist;
- wobei eine Gas-Düsennadel (27) der Brenngas-Injektoreinheit (7) über an den Flüssigkraftstoff-Steuerteil (21) versorgten Flüssigkraftstoff hubsteuerbar ist; wobei
- die Brenngas-Injektoreinheit (7) einen Leckagesammelraum (53) definiert, über welchen ein Leckagepfad (57) geführt ist, welcher sich von dem Flüssigkraftstoff-Steuerteil (21) in den Gasdüsenteil (23) erstreckt; wobei
- das Dual-Fuel-Kraftstoffeinspritzsystem (1) eine Druckreguliervorrichtung (63) aufweist, mittels welcher ein definiertes Druckniveau in dem Leckagesammelraum (53) einstellbar ist; wobei
- der Flüssigkraftstoff-Steuerteil (21) einen Steuerraum (31) aufweist, ausgehend von welchem der Leckagepfad (57) hin zum Gas-Düsenteil (23) führt; und wobei
- der Flüssigkraftstoff-Steuerteil (21) eine Ventilvorrichtung (35) aufweist, über welche der Steuerraum (31) von der Flüssigkraftstoffversorgung anströmseitig abkoppelbar ist.

2. Dual-Fuel-Kraftstoffeinspritzsystem (1) nach Anspruch 1,
**dadurch gekennzeichnet, dass**
- die Druckreguliervorrichtung (63) für die Einstellung eines definierten Druckniveaus in dem Leckagesammelraum (53) eine Kommunikationsverbindung (65) mit dem Leckagesammelraum (53) aufweist.

3. Dual-Fuel-Kraftstoffeinspritzsystem (1) nach einem der vorhergehenden Ansprüche,
**dadurch gekennzeichnet, dass**
- die Druckreguliervorrichtung (63) zur Absteuerung von Leckage aus dem Leckagesammelraum (53) eingerichtet ist.

4. Dual-Fuel-Kraftstoffeinspritzsystem (1) nach einem der vorhergehenden Ansprüche,
**dadurch gekennzeichnet, dass**
- die Flüssigkraftstoffversorgungseinrichtung (5) eine Niederdruckpumpe (13) und eine Hochdruckpumpe (15) aufweist;
- das Dual-Fuel-Kraftstoffeinspritzsystem (1) eingerichtet ist, aus dem Leckagesammelraum (53) abgesteuerte Leckage in eine Strömungsverbindung (19b) der Niederdruckpumpe (13) mit der Hochdruckpumpe (15) zwischen denselben einzuleiten.

5. Dual-Fuel-Kraftstoffeinspritzsystem (1) nach einem der vorhergehenden Ansprüche,
**dadurch gekennzeichnet, dass**
- der Leckagesammelraum (53) mittels ein oder mehrerer Abstreifelemente (55) gebildet ist, welche gegen die Gas-Düsennadel (27) wirken.

6. Dual-Fuel-Kraftstoffeinspritzsystem (1) nach einem der vorhergehenden Ansprüche,
**dadurch gekennzeichnet, dass**
- die Gas-Injektoreinheit (7) eine Dichtung (69) aufweist, mittels welcher die Gas-Düsennadel (27) gegen eine Nadelführung (49) der Gas-Injektoreinheit (7) gedichtet ist.

7. Dual-Fuel-Kraftstoffeinspritzsystem (1) nach einem der vorhergehenden Ansprüche,
**dadurch gekennzeichnet, dass**
- das Dual-Fuel-Kraftstoffeinspritzsystem (1) weiterhin wenigstens eine Flüssigkraftstoff-Injektoreinheit (5) aufweist.

8. Dual-Fuel-Kraftstoffeinspritzsystem (1) nach einem der Ansprüche 1 bis 7,
**dadurch gekennzeichnet, dass**
- über die Ventilvorrichtung (35) die Kommunikation des Leckagepfads (57) mit der Flüssigkraftstoffversorgungseinrichtung (5) anströmseitig unterbrechbar und herstellbar ist.

9. Verfahren zur Ausführung mit einem Dual-Fuel-Kraftstoffeinspritzsystem (1) nach einem der vorhergehenden Ansprüche,
**dadurch gekennzeichnet, dass**
- in einer ersten Zündstrahl-Betriebsart des Dual-Fuel-Kraftstoffeinspritzsystems (1) das Druckniveau im Leckagesammelraum (53) mittels der Druckreguliervorrichtung (63) auf einen Wert größer oder gleich einem Gas-Versorgungsdruckniveau am Gasdüsenteil (23) eingestellt wird; und/oder
- in einer zweiten Zündstrahl-Betriebsart des Dual-Fuel-Kraftstoffeinspritzsystems (1) das Druckniveau im Leckagesammelraum (53) mittels der Druckreguliervorrichtung (63) auf einen Wert kleiner einem Gas-Versorgungsdruckniveau am Gasdüsenteil (23) eingestellt wird.

10. Verfahren nach Anspruch 9,
**dadurch gekennzeichnet, dass**
- bei einem Umschalten des Dual-Fuel-Kraftstoffeinspritzsystems (1) von einem Zündstrahlbetrieb auf einen Flüssigkraftstoffbetrieb der Leckagesammelraum (53) über die Druckreguliervorrichtung (63) durch Absteuern von Leckage in einem ersten Schritt entlastet wird während ein erstes Gas-Druckniveau am Gasdüsenteil (23) versorgungsseitig aufrechterhalten wird;
- in einem zweiten Schritt das Absteuern via die Druckreguliervorrichtung (63) unterbunden wird;
- in einem dritten Schritt ein Gas-Versorgungsdruckniveau unter das erste Gas-Druckniveau abgesenkt wird.

11. Verfahren nach Anspruch 9,
**dadurch gekennzeichnet, dass**
- bei einem Umschalten des Dual-Fuel-Kraftstoffeinspritzsystems (1) von einem Zündstrahlbetrieb auf Flüssigkraftstoffbetrieb in einem ersten Schritt eine Kommunikationsverbindung des Leckagesammelraums mit der Strömungsverbindung (19b) der Niederdruckpumpe (13) mit der Hochdruckpumpe (15) über die Druckreguliervorrichtung (63) geführt hergestellt wird;
- in einem zweiten Schritt ein Gas-Versorgungsdruckniveau am Gasdüsenteil (23) eingestellt wird, welches gleich oder größer dem Druckniveau im Strömungsweg (19b) zwischen Niederdruckpumpe (13) und Hochdruckpumpe (15) ist.

12. Verfahren nach Anspruch 10 oder 11,
**dadurch gekennzeichnet, dass**
- vor dem jeweiligen ersten Schritt die Kommunikation des Leckagepfads (57) mit der Flüssigkraftstoffversorgungseinrichtung (5) anströmseitig unterbrochen wird.

13. Brennkraftmaschine,
**gekennzeichnet durch**
- ein Dual-Fuel-Kraftstoffeinspritzsystem (1) nach einem der vorhergehenden Ansprüche.

## Claims

1. Dual-fuel injection system (1) having a fuel gas supply device (3) and a liquid fuel supply device (5), comprising:
- a fuel gas injector unit (7) having a liquid fuel control part (21) and a gas nozzle part (23), to which fuel gas can be supplied;
- wherein the lift of a gas nozzle needle (27) of the fuel gas injector unit (7) can be controlled via liquid fuel supplied to the liquid fuel control part (21); wherein
- the fuel gas injector unit (7) defines a leakage collecting space (53), via which a leakage path (57) is led which extends from the liquid fuel control part (21) into the gas nozzle part (23); wherein
- the dual-fuel injection system (1) comprises a pressure regulating device (63), which serves for setting a defined pressure level in the leakage collecting space (53); wherein
- the liquid fuel control part (21) comprises a control chamber (31), from which the leakage path (57) leads to the gas nozzle part (23); and wherein
- the liquid fuel control part (21) comprises a valve device (35), via which the control chamber (31) can be isolated from the liquid fuel supply on the admission flow side.

2. Dual-fuel injection system (1) according to Claim 1,
**characterized in that**
- the pressure regulating device (63) comprises a communicating connection (65) to the leakage collecting space (53) for setting a defined pressure level in the leakage collecting space (53).

3. Dual-fuel injection system (1) according to one of the preceding claims,
**characterized in that**
- the pressure regulating device (63) is adapted to diverting leakage from the leakage collecting space (53) .

4. Dual-fuel injection system (1) according to one of the preceding claims,
**characterized in that**
- the liquid fuel supply device (5) comprises a low-pressure pump (13) and a high-pressure pump (15) ;
- the dual-fuel injection system (1) is adapted to introduce leakage diverted from the leakage collecting space (53) into a flow connection (19b) of the low-pressure pump (13) to the high-pressure pump (15) between these pumps.

5. Dual-fuel injection system (1) according to one of the preceding claims,
**characterized in that**
- the leakage collecting space (53) is formed by means of one or more scraper elements (55), which act in opposition to the gas nozzle needle (27).

6. Dual-fuel injection system (1) according to one of the preceding claims,
**characterized in that**
- the gas injector unit (7) comprises a seal (69), which serves to seal the gas nozzle needle (27) off from a needle guide (49) of the gas injector unit (7) .

7. Dual-fuel injection system (1) according to one of the preceding claims,
**characterized in that**
- the dual-fuel injection system (1) further comprises at least one liquid fuel injector unit (5) .

8. Dual-fuel injection system (1) according to one of Claims 1 to 7,
**characterized in that**
- the communication of the leakage path (57) to the liquid fuel supply device (5) can be interrupted and established on the admission flow side via the valve device (35).

9. Method for implementing a dual-fuel injection system (1) according to one of the preceding claims, **characterized in that**
- in a first pilot ignition operating mode of the dual-fuel injection system (1) the pressure level in the leakage collecting space (53) is set by means of the pressure regulating device (63) to a value greater than or equal to a gas supply pressure level on the gas nozzle part (23); and/or
- in a second pilot ignition operating mode of the dual-fuel injection system (1) the pressure level in the leakage collecting space (53) is set by means of the pressure regulating device (63) to a value less than a gas supply pressure level on the gas nozzle part (23).

10. Method according to Claim 9,
**characterized in that**
- in a first step when the dual-fuel injection system (1) is switched from a pilot ignition mode to a liquid fuel mode, the leakage collecting space (53) is relieved by diverting leakage via the pressure regulating device (63), whilst maintaining a first gas pressure level on the gas nozzle part (23) on the supply side;
- in a second step the diversion via the pressure regulating device (63) is cut off;
- in a third step a gas supply pressure level is reduced to a level below the first gas pressure level.

11. Method according to Claim 9,
**characterized in that**
- in a first step when the dual-fuel injection system (1) is switched from a pilot ignition mode to liquid fuel mode, a communicating connection of the leakage collecting space to the flow connection (19b) of the low-pressure pump (13) to the high-pressure pump (15) is established via the pressure regulating device (63);
- in a second step a gas supply pressure level is set on the gas nozzle part (23) which is equal to or greater than the pressure level in the flow path (19b) between the low-pressure pump (13) and the high-pressure pump (15).

12. Method according to Claim 10 or 11, **characterized in that**
- before the respective first step the communication of the leakage path (57) to the liquid fuel supply device (5) is interrupted on the admission flow side.

13. Internal combustion engine
**characterized by**
- a dual-fuel injection system (1) according to one of the preceding claims.

## Revendications

1. Système d'injection de carburant dual-fuel (1) comprenant un dispositif d'alimentation en gaz combustible (3) et un dispositif d'alimentation en carburant liquide (5), présentant :
- une unité d'injecteur de gaz combustible (7) avec une partie de commande de carburant liquide (21) et une partie de buse à gaz (23) au niveau de laquelle du gaz combustible peut être acheminé ;
- une course d'une aiguille de buse à gaz (27) de l'unité d'injecteur de gaz combustible (7) pouvant être commandée par le biais de carburant liquide alimenté au niveau de la partie de commande de carburant liquide (21) ;
- l'unité d'injecteur de gaz combustible (7) définissant un espace de collecte de fuite (53) par le biais duquel est guidé un chemin de fuite (57) qui s'étend depuis la partie de commande de carburant liquide (21) dans la partie de buse à gaz (23) ;
- le système d'injection de carburant dual-fuel (1) présentant un dispositif de régulation de la pression (63) au moyen duquel un niveau de pression défini peut être ajusté dans l'espace de collecte de fuite (53) ;
- la partie de commande de carburant liquide (21) présentant un espace de commande (31) à partir duquel le chemin de fuite (57) conduit à la partie de buse à gaz (23) ; et
- la partie de commande de carburant liquide (21) présentant un dispositif de soupape (35) par le biais duquel l'espace de commande (31) peut être désaccouplé de l'alimentation en carburant liquide du côté de l'afflux.

2. Système d'injection de carburant dual-fuel (1) selon la revendication 1,
**caractérisé en ce que**
- le dispositif de régulation de pression (63) pour l'ajustement d'un niveau de pression défini dans l'espace de collecte de fuite (53) présente une liaison de communication (65) avec l'espace de collecte de fuite (53).

3. Système d'injection de carburant dual-fuel (1) selon l'une quelconque des revendications précédentes,
**caractérisé en ce que**
- le dispositif de régulation de pression (63) est prévu pour commander l'arrêt de la fuite provenant de l'espace de collecte de fuite (53).

4. Système d'injection de carburant dual-fuel (1) selon l'une quelconque des revendications précédentes,
**caractérisé en ce que**
- le dispositif d'alimentation en carburant liquide (5) présente une pompe basse pression (13) et une pompe haute pression (15) ;
- le système d'injection de carburant dual-fuel (1) est prévu pour introduire une fuite commandée à l'arrêt hors de l'espace de collecte de fuite (53) dans une liaison d'écoulement (19b) entre la pompe basse pression (13) et la pompe haute pression (15) entre ces dernières.

5. Système d'injection de carburant dual-fuel (1) selon l'une quelconque des revendications précédentes,
**caractérisé en ce que**
- l'espace de collecte de fuite (53) est formé au moyen d'un ou plusieurs éléments de raclage (55) qui agissent contre l'aiguille de buse à gaz (27) .

6. Système d'injection de carburant dual-fuel (1) selon l'une quelconque des revendications précédentes,
**caractérisé en ce que**
- l'unité d'injecteur de gaz (7) présente un joint d'étanchéité (69) au moyen duquel l'aiguille de buse gaz (27) est étanchéifiée vis-à-vis d'un guidage d'aiguille (49) de l'unité d'injecteur de gaz (7).

7. Système d'injection de carburant dual-fuel (1) selon quelconque des revendications précédentes,
**caractérisé en ce que**
- le système d'injection de carburant dual-fuel (1) présente en outre au moins une unité d'injecteur de carburant liquide (5).

8. Système d'injection de carburant dual-fuel (1) selon l'une quelconque des revendications 1 à 7,
**caractérisé en ce que**
- la communication du chemin de fuite (57) avec le dispositif d'alimentation en carburant liquide (5) peut être interrompue et établie du côté de l'afflux par le biais du dispositif de soupape (35) .

9. Procédé de mise en oeuvre avec un système d'injection de carburant dual-fuel (1) selon l'une quelconque des revendications précédentes,
**caractérisé en ce que**
- dans un premier mode de fonctionnement à jet d'allumage du système d'injection de carburant dual-fuel (1), le niveau de pression dans l'espace de collecte de fuite (53) est ajusté au moyen du dispositif de régulation de pression (63) à une valeur supérieure ou égale à un niveau de pression d'alimentation en gaz au niveau de la partie de buse à gaz (23) ; et/ou
- dans un deuxième mode de fonctionnement à jet d'allumage du système d'injection de carburant dual-fuel (1), le niveau de pression dans l'espace de collecte de fuite (53) est ajusté au moyen du dispositif de régulation de pression (63) à une valeur inférieure à un niveau de pression d'alimentation de gaz au niveau de la partie de buse à gaz (23).

10. Procédé selon la revendication 9,
**caractérisé en ce que**
- lors d'une commutation du système d'injection de carburant dual-fuel (1) d'un fonctionnement à jet d'allumage à un mode à carburant liquide, l'espace de collecte de fuite (53) est détendu au moyen du dispositif de régulation de pression (63) dans une première étape par commande à l'arrêt de la fuite tandis qu'un premier niveau de pression de gaz est maintenu du côté de l'alimentation au niveau de la partie de buse à gaz (23) ;
- dans une deuxième étape, la commande à l'arrêt est supprimée par le biais du dispositif de régulation de pression (63) ;
- dans une troisième étape, un niveau de pression d'alimentation de gaz est abaissé en dessous du premier niveau de pression de gaz.

11. Procédé selon la revendication 9,
**caractérisé en ce que**
- lors d'une commutation du système d'injection de carburant dual-fuel (1) d'un fonctionnement à jet d'allumage à un mode à carburant liquide, dans une première étape, une liaison de communication de l'espace de collecte de fuite avec la liaison d'écoulement (19b) de la pompe basse pression (13) à la pompe haute pression (15) est établie de manière guidée par le biais du dispositif de régulation de pression (63) ;
- dans une deuxième étape, un niveau de pression d'alimentation en gaz au niveau de la partie de buse à gaz (23) est ajusté, lequel est supérieur ou égal au niveau de pression dans la voie d'écoulement (19b) entre la pompe basse pression (13) et la pompe haute pression (15).

12. Procédé selon la revendication 10 ou 11,
**caractérisé en ce que**
- avant la première étape respective, la communication du chemin de fuite (57) avec le dispositif d'alimentation en carburant liquide (5) est interrompue du côté de l'afflux.

13. Moteur à combustion interne
**caractérisé par**
- un système d'injection de carburant dual-fuel (1) selon l'une quelconque des revendications précédentes.
